# EUROPÄISCHE PATENTSCHRIFT

(11) **EP 1 840 531 B1**
(45) Veröffentlichungstag und Bekanntmachung des Hinweises auf die Patenterteilung: **11.11.2015**
(21) Anmeldenummer: 06024861.4
(22) Anmeldetag: 01.12.2006
(51) Int. Cl.: G01F 1/66

(54) **Ultraschalldurchflussmessgerät**
Ultrasound flow measuring device
Débitmètre à ultrasons

(30) Priorität: 30.03.2006 DE 102006015218
(43) Veröffentlichungstag der Anmeldung: 03.10.2007
(73) Patentinhaber: Krohne AG, 4019 Basel (CH)
(72) Erfinder: Molenaar, Marcel Meijlom, 3311ZG Dordrecht (NL); Pors, Jan Teunis Aart, 3262EK, Oud-Beijerland (NL); Huijzer, Arie, 3363BS, Sliedrecht (NL)
(74) Vertreter: Gesthuysen Patent- und Rechtsanwälte

(56) Entgegenhaltungen:
- EP-A- 1 477 778
- DE-A1- 4 124 692
- DE-A1- 10 216 037
- US-A- 4 297 607

## Beschreibung

Die Erfindung betrifft ein Ultraschalldurchflussmessgerät, insbesondere ein Clamp-on-Ultraschalldurchflussmessgerät, zur Messung des Durchflusses durch eine von einem Medium durchströmte Leitung, mit wenigstens einem Ultraschallwandler, wobei der Ultraschallwandler innerhalb einer elektromagnetischen Abschirmeinrichtung vorhanden ist, die elektromagnetische Abschirmeinrichtung von einem metallischen oder zumindest metallisch beschichteten Gehäuse gebildet wird, zum elektrischen Anschluss des Ultraschallwandlers ein Kabel mit einer Abschirmung vorhanden ist und die Abschirmung des Kabels mit der elektromagnetischen Abschirmeinrichtung galvanisch leitend verbunden ist, der Ultraschallwandler ein Piezo-Element aufweist, ein Anschlusselement zur Anbringung des Ultraschallwandlers an der Leitung vorhanden ist, das Piezo-Element auf dem Anschlusselement befestigt ist, zwischen dem Piezo-Element und dem Anschlusselement eine Zwischenplatte vorhanden ist und die Zwischenplatte als ein elektrischer Anschluss für das Piezo-Element dient.

Clamp-on-Ultraschalldurchflussmessgeräte zeichnen sich dadurch aus, dass sie besonders einfach eingesetzt werden können: Im Gegensatz zu anderen Ultraschalldurchflussmessgeräten, die in bestehende Rohrleitungssysteme fest integriert werden müssen, indem sie ein Stück der Rohrleitung ersetzen, kannen Clamp-on-Durchflussmessgeräte einfach von außen auf einen geeigneten Leitungsabschnitt des Rohrleitungssystems aufgesetzt werden. Dieser Leitungsabschnitt, an dem das Clamp-on-Ultraschalldurchflussmessgerät angebracht ist, wird damit quasi zur Messleitung, ohne dass es einer eigenen separaten Messleitung bedarf, die in das Rohrleitungssystem aufwendig eingesetzt werden muss. Dies macht die Verwendung von Clamp-on-Ultraschalldurchflussmessgeräten einfach und kostengünstig.

Bei Clamp-on-Ultraschalldurchflussmessgeräten, wie auch bei anderen Ultraschalldurchflussmessgeräten, ist jedoch häufig problematisch, dass die erzielbaren Signale nur sehr gering sind. Dies ist z. B. auf geringe Betriebsspannungen aufgrund von eigensicher ausgebildeten Stromkreisen zurückzuführen. Darüber hinaus wird das Signal-zu-Rausch-Verhältnis auch durch nicht angepasste akustische Übergänge zwischen unterschiedlichen Materialien verschlechtert. Schließlich kommt es auch auf dem Signalweg zu Signalverlusten aufgrund von Dämpfungseffekten in dem jeweiligen Medium. Damit ist häufig ein nur sehr geringes Messsignal verbunden, das von einem empfangenden Ultraschallwandler ausgegeben wird. Ein solches geringes Messsignal ist mm insbesondere hinsichtlich elektromagnetischer Störungen stark anfällig.

Aus der US 4,297,607 ist eine Ultraschallwandleranordnung zur Durchführung von Messungen in Flüssigkeiten bekannt. Zu dieser Ultraschallwandleranordnung gehören ein Ultraschallwandler, ein Stützelement und ein Anpassungselement. Der Ulraschallwandler, das Stützelement und das Anpassungselement sind in einem elektrisch leitfähigen zylindrischen Gehäuse angeordnet, das durch ein Abdichtelement gegenüber der Flüssigkeit abgedichtet ist. Der Ultraschallwandler wird an der der Flüssigkeit abgewandten Seite von einem hermetisch abgedichteten elektrischen Anschlusselement kontaktiert, das sich durch einen Deckel des Gehäuses erstreckt. Zwischen dem Ultraschallwandler und dem Abdichtelement ist das Anpassungselement angeordnet.

Die DE 4124 692 A1 offenbart einen Ultraschallmesskopf mit einem Schallvorlaufkörper und mindestens einem elektroakustischen Wandler zur Messung an heißen Objekten. Wesentlich ist hierbei, dass der Schallvorlaufkörper aus einem Graphitmaterial besteht Zwischen dem Schallvorlaufkörper und dem elektroakustischen Wandler ist eine Metallschicht vorgesehen. Folglich kann der elektroakustische Wandler auf dem Schallvorlaufkörper aufgelötet werden.

Bekannt ist des weiteren aus der DE 102 16 037 A 1 ein Schall- oder Ultraschallsensor mit einem von einem Boden topfförmig abgeschlossenen Gehäuse, einem piezoelektrischen Element zur Erzeugung und/oder Aufnahme von Schall oder Ultraschall durch den Boden hindurch, eine Anpassschicht zwischen dem piezoelektrischen Element und dem Boden und einem metallischen Ring, der die Anpassschicht formschlüssig umgibt.

Schließlich offenbart die EP 1 477 778 A 1 ein Ultraschalldurchflussmessgerät mit einem leitfähigen Gehäuse, einer piezoelektrischen Schicht und einer akustischen Anpassungsschicht. Die piezoelektrische Schicht befindet sich innerhalb des Gehäuses und wird jeweils über eine Elektrode an der dem zu untersuchenden Medium zugewandten Seite von dem Gehäuse und an der dem zu untersuchenden Medium abgewandten Seite von einem Anschlusselement kontaktiert. Die akustische Anpassungsschicht ist außerhalb des Gehäuses an der dem zu untersuchenden Medium zugewandten Seite angeordnet.

Ausgehend von dem eingangs beschriebenen Stand der Technik ist es die Aufgabe der Erfindung, ein Ultraschalldurchflussmessgerät, insbesondere ein Clamp-on-Ultraschalldurchflussmessgerät, anzugeben, das ein gutes Signalzu-Rausch-Verhältnis liefert.

Das erfindungsgemäße Ultraschalldurchflussmessgerät ist zunächst und im Wesentlichen dadurch gekennzeichnet, dass die Zwischenplatte, die von einem Teil des metallischen oder metallisch beschichteten Gehäuses gebildet wird, wenigstens eine Ausnehmung aufweist, in der eine Klebemittelschicht zur Befestigung des Piezo-Elements an dem Anschlusselement vorhanden ist.

Erfindungsgemäß ist also vorgesehen, dass Maßnahmen getroffen werden, die gewährleisten, dass der Ultraschallwandler keinen elektromagnetischen Störungen ausgesetzt wird. Können in die Leitungen und Bauteile, wie elektronische Bauteile, des Ultraschallwandlers keine elektromagnetischen Störungen einkoppeln, so ist es möglich, z. B. mittels einer abgeschirmten Leitung, das von einem empfangenden Ultraschallwandler ausgegebene Signal zumindest im Wesentlichen frei von äußeren Störungen auszukoppeln.

Durch das Vorhandensein der in Rede stehenden Zwischenplatte lassen sich weitere Vorteile erzielen, nämlich eine optimale Anpassung des Übergangs der Ultraschallsignale von dem Piezo-Element auf das Anschlusselement durch entsprechende geometrische Ausgestaltung und Anpassung der Zwischenplatte, wie weiter unten im Detail ausgeführt.

Zwar kann die Zwischenplatte unterschiedlichen Geometrien folgen, vorzugsweise verlaufen jedoch die Oberseite und die Unterseite der Zwischenplatte parallel zueinander. Auf diese Weise werden die durch die Zwischenplatte laufenden Ultraschallsignale den geringstmöglichen Beeinflussungen durch die Geometrie der Zwischenplatte unterworfen.

Selbstverständlich gibt es verschiedene Möglichkeiten, das Piezo-Element elektrisch anzuschließen. Die Zwischenplatte dient als elektrischer Anschluss für das Piezo-Element. Dazu kann die Zwischenplatte mit einem metallischen Anteil in direktem physikalischen, galvanisch leitenden Kontakt mit dem Piezo-Element stehen. Insbesondere ist in diesem Zusammenhang vorgesehen, dass das Piezo-Element plan auf der Zwischenplatte bzw. Teilen der Zwischenplatte aufliegt. Im Übrigen ist es vorteilhaft, das Piezo-Element mittels der Zwischenplatte an dem Anschlusselement zu befestigen. Dazu weist die Zwischenplatte wenigstens eine Ausnehmung auf, in der eine Klebemittelschicht zur Befestigung des Piezo-Elements an dem Anschlusselement vorhanden ist. Das heißt mit anderen Worten, dass das Piezo-Element auf das Anschlusselement aufgeklebt ist, nämlich mittels der in der Aufnehmung der Zwischenplatte vorhandenen Klebemittelschicht. Die Dicke der Klebemittelschicht kann der Dicke der Zwischenplatte entsprechen.

Bei einer bevorzugten Ausführungsform des erfindungsgemäßen Ultraschalldurchflussmessgeräts ist der Messwandler zum Betrieb mit einer vorbestimmten Ultraschallfrequenz realisiert und entspricht die Dicke der Zwischenplatte einem Viertel der Ultraschallwellenlänge in der Klebemittelschicht bei der vorbestimmten Ultraschallfrequenz. Auf diese Weise wird ebenfalls eine optimale Anpassung erzielt, die die geringsten Verluste gewährleistet. Für die Klebemittelschicht kann ein elektrisch leitfähiger Kleber vorhanden sein, so dass die elektrische Kontaktierung des Piezo-Elements nicht zwingend über die Zwischenplatte erfolgen muss.

Bei einer wiederum bevorzugten Ausführungsform eines erfindungsgemäßen Ultraschalldurchflussmessgeräts ist die Zwischenplatte zumindest auf der dem Piezo-Element zugewandten Seite, vorzugsweise vollständig, metallisch. Eine solche metallische Ausbildung der Zwischenplatte ist auch für die zuvor beschriebenen Funktion der Zwischenplatte als elektrischer Anschluss für das Piezo-Element erforderlich.

Der elektrische Anschluss des Piezo-Elements auf seiner der Zwischenplatte gegenüberliegenden Seite kann auf verschiedene Weisen ausgebildet sein. Gemäß einer bevorzugten Weiterbildung der Erfindung ist jedoch vorgesehen, dass das Piezo-Element auf seiner der Zwischenplatt gegenüberliegenden Seite als elektrischen Anschluss eine auf dem Piezo-Element anliegende Anschlussfeder aufweist. Damit wird eine besonders einfache und verlässliche elektrische Kontaktierung des Piezo-Elements erzielt.

Grundsätzlich kann das Piezo-Element frei auf dem Anschlusselement befestigt sein. Gemäß einer bevorzugten Weiterbildung der Erfindung ist jedoch vorgesehen, dass das Anschlusselement Positionierungseinrichtungen für das Piezo-Element aufweist. Insbesondere kann in diesem Zusammenhang vorgesehen sein, dass das Anschlusselement als Positionierungseinrichtungen von dem Anschlusselement hervorstehende Wände oder Stifte aufweist, innerhalb derer ein genau definierter Positionierungsort für das Piezo-Element bestimmt ist.

Schließlich kann das Anschlusselement aus unterschiedlichen Materialien gefertigt sein und unterschiedlichen Geometrien folgen. Gemäß einer bevorzugten Weiterbildung der Erfindung ist jedoch vorgesehen, dass als Anschlusselement ein, vorzugsweise aus Kunststoff gefertigter, Keil vorhanden ist.

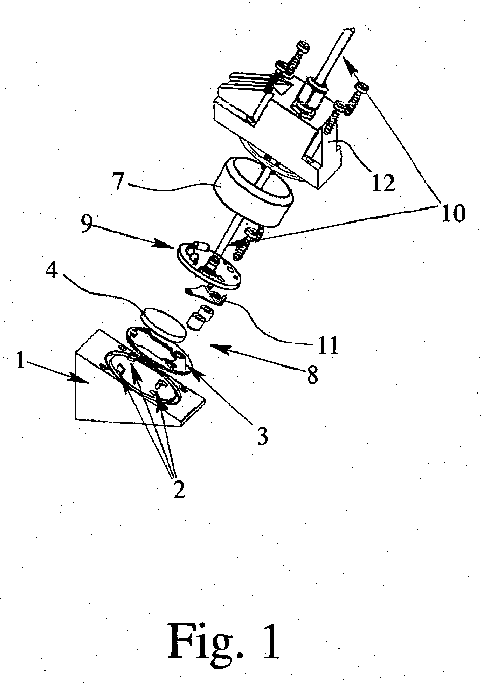

Nachfolgend wird ein bevorzugtes Ausführungsbeispiel der Erfindung unter Bezugnahme auf die Zeichnung im einzelnen beschrieben. In der Zeichnung zeigt
- Fig. 1: die gesamte Ultraschallwandlereinrichtung eines Ultraschalldurchflußmeßgeräts gemäß einem bevorzugten Ausflünmgsbeispiel der Erfindung in einer Explosionsdarstellung,
- Fig. 2: einen ersten Schnitt der Ultraschallwandlereinrichtung des Ultraschalldurchflußmeßgeräts gemäß dem bevorzugten Ausführungsbeispiel der Erfindung und
- Fig. 3: einen zweiten Schnitt der Ultraschallwandlereinrichtung des Ultraschalldurchflußrneßgeräts gemäß dem bevorzugten Ausführungsbeispiel der Erfindung.

Im folgenden wird für ein Ultraschalldurchflußmeßgerät gemäß einem bevorzugten Ausführungsbeispiel der Erfindung der vorliegend relevante Teil, nämlich die gesamte Ultraschallwandlereinrichtung einschließlich Anschlußelement und Gehäuse beschrieben.

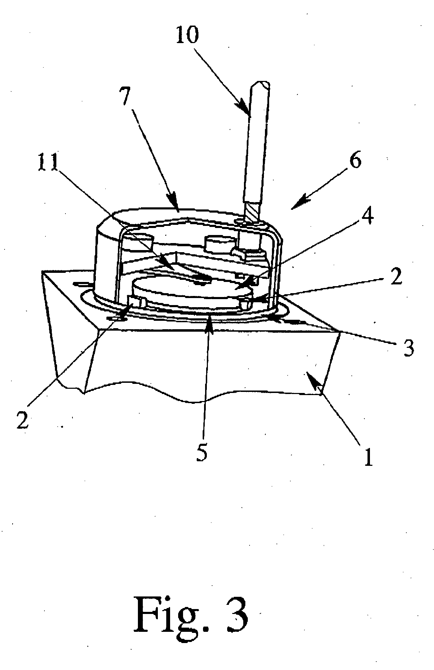

Alle Bestandteile dieser Ultraschallwandlereinheit sind aus der Explosionsdarstellung in Fig. 3 ersichtlich: Die Ultraschallwandlereinheit weist ein Anschlußelement 1 in Form eines Kunststoffkeils auf, über den der eigentliche Anschluß der Ultraschallwandlereinheit an die nicht weiter dargestellte Leitung erfolgt, durch die das Medium strömt, dessen Durchfluß gemessen werden soll. Das Anschlußelement 1 weist Positionierungseinrichtungen 2 in Form von hervorstehenden Wandabschnitten auf, die als Positionierungshilfe für eine metallische Zwischenplatte 3 und ein Piezo-Element 4 dienen.

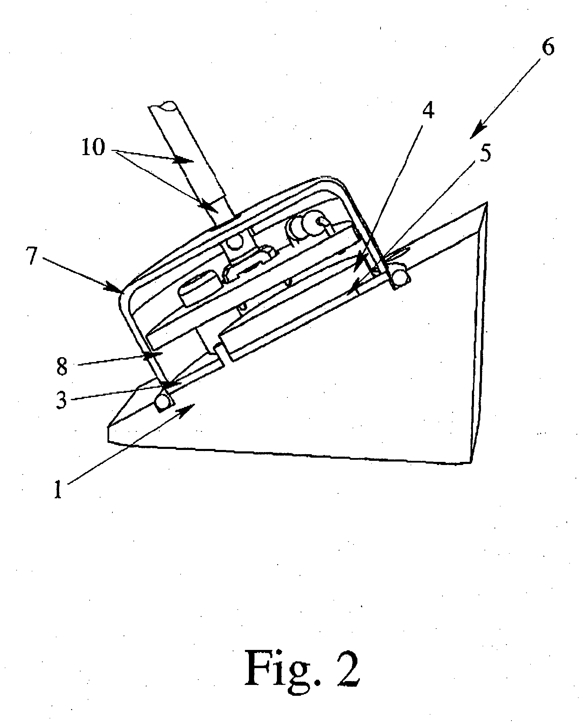

Die Zwischenplatte 3 weist in ihrem Innenbereich eine Öffnung auf, so daß bei auf dem Anschlußelement 1 aufliegender Zwischenplatte 3 sich ein Raum ergibt, der mit einer Klebemittelschicht 5 gefüllt werden kann, wie z. B. aus den Fig. 2 und 3 ersichtlich. Bei der Klebemittelschicht 5 kann es sich z. B. um einen ein- oder zweikomponentigen elektrisch leitfähigen Epoxidkleber handeln. Wie insbesondere auch aus den Fig. 2 und 3 ersichtlich, ist die Zwischenplatte 3 derart ausgebildet, daß das Piezo-Element 4 nicht nur auf der Klebemittelschicht 5 aufliegt, sondern auch auf Teilen der Zwischenplatte 3.

Bei dem vorliegend beschriebenen bevorzugten Ausführungsbeispiel der Erfindung ist nun zur Abschirmung von elektromagnetischen Störungen eine elektromagnetische Abschirmeinrichtung 6 vorgesehen, die sich zusammensetzt aus der Zwischenplatte 3 und einem Gehäuse 7 aus Metall. Das Gehäuse 7 liegt auf der Zwischenplatte 3 auf, so daß sich ein geschlossener, abgeschirmter Raum ergibt, innerhalb dessen der Ultraschallwandler 8 einschließlich des Piezo-Elements 4 sowie weitere elektronische Einrichtungen 9 vorgesehen sind.

Für den elektrischen Anschluß des Piezo-Elements 4 ist nun folgendes vorgesehen: Der elektrische Anschluß der Ultraschallwandlereinheit erfolgt über ein Koaxialkabel 10 dessen Abschirmung mit der elektromagnetischen Abschirmeinrichtung 6, nämlich dem Gehäuse 7 verbunden ist, und dessen Seele auf eine Anschlußfeder 11 geführt ist, die auf der der Zwischenplatte 3 gegenüberliegenden Seite des Piezo-Elements 4 vorgesehen ist. Dadurch, daß das Piezo-Element 4 auf der Zwischenplatte 3 in galvanisch leitender Weise aufliegt und die Abschirmung des Koaxialkabels 10 mit dem auf der Zwischenplatte 3 aufliegendem Gehäuse 7 verbunden ist, erfolgt eine Erdung des Piezo-Elements auf der der Anschlußfeder 11 gegenüberliegenden Seite.

Geschützt werden die gesamten Bauteile schließlich durch ein Plastikgehäuse 12, das auf das Anschlußelement 1 aufgeschraubt wird. Insgesamt wird damit erreicht, daß das von dem Ultraschallwandler 8 ausgegebene Meßsignal quasi frei von äußeren Störungen ausgegeben werden kann.

Wesentlich ist dabei auch, daß die Dicke der Klebemittelschicht 5 der Dicke der Zwischenplatte 3 entspricht. Dabei ist die Meßwandlereinrichtung zum Betrieb mit einer vorbestimmten Ultraschallfrequenz vorgesehen, so daß die Dicke der Zwischenplatte 3 derart gewählt werden kann, daß sie einem Viertel der Ultraschallwellenlänge in der Klebemittelschicht 5 bei der vorbestimmten Ultraschallfrequenz entspricht. Damit wird der Vorteil einer optimalen Anpassung des Übergangs der Ultraschallsignale von dem Piezo-Element 4 auf das Anschlußelement 11 erzielt.

## Patentansprüche

1. Ultraschalldurchflussmessgerät, insbesondere Clamp-on-Ultraschalldurchflussmessgerät, zur Messung des Durchflusses durch eine von einem Medium durchströmte Leitung, mit wenigstens einem Ultraschallwandler (8), wobei der Ultraschallwandler (8) innerhalb einer elektromagnetischen Albschirmeinrichtung (6) vorhanden ist, die elektromagnetische Abschirmeinrichtung (6) von einem metallischen oder zumindest metallisch beschichteten Gehäuse (7) gebildet wird, zum elektrischen Anschluss des Ultraschallwandlers (8) ein Kabel (10) mit einer Abschirmung vorhanden ist und die Abschirmung des Kabels (10) mit der elektromagnetischen Abschirmeinrichtung (6) galvanisch leitend verbunden ist, der Ultraschallwandler (8) ein Piezo-Element (4) aufweist, ein Anschlusselement (1) zur Anbringung des Ultraschallwandlers (8) an der Leitung vorhanden ist, das Piezo-Element (4) auf dem Anschlusselement (1) befestigt ist, zwischen dem Piezo-Element (4) und dem Anschlusselement (1) eine Zwischenplatte (3) vorhanden ist und die Zwischenplatte (3) als ein elektrischer Anschluss für das Piezo-Element (4) dient,
**dadurch gekennzeichnet,**
**dass** die Zwischenplatte (3), die von einem Teil des metallischen oder metallisch beschichteten Gehäuses (7) gebildet wird, wenigstens eine Ausnehmung aufweist, in der eine Klebemittelschicht (5) zur Befestigung des Piezo-Elements (4) an dem Anschlußelement (1) vorhanden ist.

2. Ultraschalldurchflussmessgerät nach Anspruch 1, **dadurch gekennzeichnet, daß** die Oberseite und die Unterseite der Zwischenplatte (3) parallel zueinander verlaufen.

3. Ultraschalldurchflussmessgerät nach Anspruch 1 oder 2, **dadurch gekennzeichnet, daß** das Piezo-Element (4) mittels der Zwischenplatte (3) an dem Anschlußelement (1) befestigt ist.

4. Ultraschalldurchflussmessgerät nach einem der Ansprüche 1 bis 3, **dadurch gekennzeichnet, daß** die Dicke der Klebemittelschicht (5) der Dicke der Zwischenplatte (3) entspricht.

5. Ultraschalldurchflussmessgerät nach Anspruch 4, **dadurch gekennzeichnet, daß** der Meßwandler (8) zum Betrieb mit einer vorbestimmten Ultraschallfrequenz vorhanden ist und die Dicke der Zwischenplatte (3) einem Viertel der Ultraschallwellenlänge in der Klebeschicht (5) bei der vorbestimmten Ultraschallfrequenz entspricht.

6. Ultraschalldurchflussmessgerät nach einem der Ansprüche 1 bis 5, **dadurch gekennzeichnet, daß** die Zwischenplatte (3) zumindest auf der dem Piezo-Element (4) zugewandten Seite, vorzugsweise vollständig, metallisch ist.

7. Ultraschalldurchflussmessgerät nach einem der Ansprüche 1 bis 6, **dadurch gekennzeichnet, daß** das Piezo-Element (4) auf seiner der Zwischenplatte (3) gegenüberliegenden Seite als elektrischen Anschluß eine auf dem Piezo-Element (4) anliegende Anschlussfeder (11) aufweist.

8. Ultraschalldurchflussmessgerät nach einem der Ansprüche 1 bis 7, **dadurch gekennzeichnet, daß** das Anschlußelement (1) Positionierungseinrichtungen (2) für das Piezo-Element (4) aufweist

9. Ultraschalldurchflussmessgerät nach einem der Ansprüche 1 bis 8, **dadurch gekennzeichnet, dass** als Anschlusselement (1) ein, vorzugsweise aus Kunststoff gefertigter, Keil vorhanden ist.

## Claims

1. Ultrasonic flowmeter, in particular a clamp-on ultrasonic flowmeter for measuring the flow through a line through which medium flows, having at least one ultrasonic transducer (8), wherein the ultrasonic transducer (8) is present within an electromagnetic shielding unit (6), the electromagnetic shielding unit (6) is made of a housing (7) that is either metallic or at least coated in metal for electrical connection, a cable (10) having a shielding is provided for electrical connection of the ultrasonic transducer (8) and the shielding of the cable (10) is in contact with the electromagnetic shielding unit (6) in a galvanically conductive manner, the ultrasonic transducer (8) has a piezo element (4), a connecting element (1) for attachment of the ultrasonic transducer (8) to the line is present, the piezo element (4) is attached to the connecting element (1), an intermediate plate (3) is present between the piezo element (4) and the connecting element (1), and the intermediate plate (3) is used as an electrical connection for the piezo element (4),
**characterized in**
**that** the intermediate plate (3), which is formed from a part of the metallic or metal-coated housing (7), has at least one recess in which an adhesive layer (5) is present for attachment of the piezo element (4) to the connecting element (1).

2. Ultrasonic flowmeter according to claim 1, **characterized in that** the upper side and the lower side of the intermediate plate (3) run parallel to one another.

3. Ultrasonic flowmeter according to claim 1 or 2, **characterized in that** the piezo element (4) is attached to the connecting element (1) by means of the intermediate plate (3).

4. Ultrasonic flowmeter according to any one of claims 1 to 3, **characterized in that** the thickness of the adhesive layer (5) corresponds to the thickness of the intermediate plate (3).

5. Ultrasonic flowmeter according to claim 4, **characterized in that** the transducer (8) is provided with a pre-determined ultrasonic frequency and the thickness of the intermediate plate (3) corresponds to one quarter of the ultrasonic wavelength in the adhesive layer (5) in the pre-determined ultrasonic frequency.

6. Ultrasonic flowmeter according to any one of claims 1 to 5, **characterized in that** the intermediate plate (3) is, preferably completely, metallic at least on the side facing the piezo element (4).

7. Ultrasonic flowmeter according to any one of claims 1 to 6, **characterized in that** the piezo element (4) has a terminal spring (11) resting on the piezo element (4) on its side opposite the intermediate plate (3) forming an electrical connection.

8. Ultrasonic flowmeter according to any one of claims 1 to 7, **characterized in that** the connection element (1) has positioning formations (2) for the piezo element (4).

9. Ultrasonic flowmeter according to any one of claims 1 to 8, **characterized in that** the connecting element (1) is provided as a wedge, preferably made of plastic.

## Revendications

1. Appareil de mesure de débit par ultrasons, en particulier appareil de mesure de débit par ultrasons à fixer par serrage, pour la mesure du débit dans un conduit traversé par un fluide, et comprenant au moins un convertisseur (8) d'ultrasons, le convertisseur (8) d'ultrasons étant prévu à l'intérieur d'un dispositif (6) de blindage électromagnétique, le dispositif (6) de blindage électromagnétique étant formé par un boîtier (7) métallique ou au moins revêtu de métal, un câble (10) doté d'un blindage étant prévu pour le raccordement électrique du convertisseur (8) d'ultrasons, et le blindage du câble (10) étant raccordé de manière galvaniquement conductrice au dispositif (6) de blindage électromagnétique, le convertisseur (8) d'ultrasons présentant un piézoélément (4), un élément de raccordement (1) destiné à placer le convertisseur (8) d'ultrasons sur le conduit, le piézoélément (4) étant fixé sur l'élément de raccordement (1), une plaque intermédiaire (3) étant prévue entre le piézoélément (4) et l'élément de raccordement (1) et la plaque intermédiaire (3) servant à raccorder électriquement le piézoélément (4), **caractérisé en ce que**
la plaque intermédiaire (3) formée d'une partie du boîtier (7) métallique ou revêtu de métal présente au moins une découpe dans laquelle une couche (5) d'agent adhésif est prévue pour fixer le piézoélément (4) sur l'élément de raccordement (1).

2. Appareil de mesure de débit par ultrasons selon la revendication 1, **caractérisé en ce que** le côté supérieur et le côté inférieur de la plaque intermédiaire (3) s'étendent parallèlement l'un à l'autre.

3. Appareil de mesure de débit par ultrasons selon les revendications 1 ou 2, **caractérisé en ce que** le piézoélément (4) est fixé sur l'élément de raccordement (1) au moyen de la plaque intermédiaire (3).

4. Appareil de mesure de débit par ultrasons selon l'une des revendications 1 à 3, **caractérisé en ce que** l'épaisseur de la couche (5) d'agent adhésif correspond à l'épaisseur de la plaque intermédiaire (3).

5. Appareil de mesure de débit par ultrasons selon la revendication 4, **caractérisé en ce que** le convertisseur de mesure (8) est prévu pour fonctionner à une fréquence ultrasonique prédéfinie et **en ce que** l'épaisseur de la plaque intermédiaire (3) correspond au quart de la longueur d'onde des ultrasons dans la couche adhésive (5) à la fréquence prédéfinie des ultrasons.

6. Appareil de mesure de débit par ultrasons selon l'une des revendications 1 à 5, **caractérisé en ce que** la plaque intermédiaire (3) est de préférence complètement métallique au moins sur son côté tourné vers le piézoélément (4).

7. Appareil de mesure de débit par ultrasons selon l'une des revendications 1 à 6, **caractérisé en ce que** le piézoélément (4) présente sur son côté opposé à la plaque intermédiaire (3) et comme raccordement électrique un ressort de raccordement (11) qui repose sur le piézoélément (4).

8. Appareil de mesure de débit par ultrasons selon l'une des revendications 1 à 7, **caractérisé en ce que** l'élément de raccordement (1) présente des dispositifs de positionnement (2) pour le piézoélément (4).

9. Appareil de mesure de débit par ultrasons selon l'une des revendications 1 à 8, **caractérisé en ce qu'**un biseau, de préférence réalisé en matière synthétique, est prévu comme élément de raccordement (1).
